(19) Europäisches Patentamt

European Patent Office

Office européen des brevets

(11) Veröffentlichungsnummer: **0 259 675**

**A2**

(12) **EUROPÄISCHE PATENTANMELDUNG**

(21) Anmeldenummer: 87112119.0

(22) Anmeldetag: 21.08.87

(51) Int. Cl.⁴: **G08B 3/10** , G05D 13/04 , G05D 13/62 , B64C 27/00 , F02C 9/28

(30) Priorität: 10.09.86 CH 3632/86

(43) Veröffentlichungstag der Anmeldung:
16.03.88 Patentblatt 88/11

(84) Benannte Vertragsstaaten:
AT DE ES FR GB IT NL SE

(71) Anmelder: **AIR-ZERMATT AG**
**Postfach**
**CH-3920 Zermatt(CH)**

Anmelder: **Vuichard, Claude**
**7, chemin de l'observatoire**
**CH - 1700 Fribourg(CH)**

(72) Erfinder: **Vuichard, Claude**
**7, chemin de l'observatoire**
**CH-1700 Fribourg(CH)**

(74) Vertreter: **Keller, René, Dr. et al**
**Patentanwälte Hartmut Keller, Dr. René**
**Keller Postfach 12**
**CH-3000 Bern 7(CH)**

(54) Warneinrichtung an einem Flugzeug.

㉗ Eine Messvorrichtung (1, 12, 13, 14) ist mit einem die Blattwinkeleinstellung der Rotorblätter eines Helikopters anzeigenden Blattwinkelgeber (1), einem Druckhöhenmesser (13) und einem Aussentemperaturfühler (14) ausgerüstet. Die Messvorrichtung (1, 12, 13, 14) ist mit einer Steuervorrichtung (4-6) verbunden, die eine Datenverarbeitungseinheit (4) und einen Programmspeicher (5) aufweist. Im Speicher (5) sind eine Datenverarbeitungsvorschrift für die Bestimmung der Dichtenhöhe aus der Druckhöhe und der Aussentemperatur sowie eine der Helikopter-Betriebsvorschrift entsprechende Datenverarbeitungsvorschrift für die Bestimmung des zulässigen Maximalwerts des Blattwinkels aus der Dichtenhöhe gespeichert. Die Steuervorrichtung (4-6) bestimmt periodisch aus der jeweiligen Druckhöhe und Aussentemperatur die Dichtenhöhe und den für diese zulässigen Maximalwert des Blattwinkels. Sie vergleicht den Blattwinkelmesswert des Blattwinkelgebers (1) mit dem Maximalwert und steuert bei den Maximalwert überschreitendem Messwert einen mit dem Sendeempfangsgerät (20) des Helikopters verbundenen Tonsignalgeber (21), der während der Dauer der Ueberschreitung ein Tonsignal an den Kopfhörer (23) des Sendeempfangsgeräts (20) gibt.

## Warneinrichtung an einem Flugzeug

Die Erfindung betrifft eine Warneinrichtung an einem Flugzeug gemäss dem Oberbegriff des Patentanspruchs 1 und eine Warneinrichtung an einem Drehflügelflugzeug, gemäss dem Oberbegriff des Patentanspruchs 2.

Ihr liegt die Aufgabe zugrunde, eine Einrichtung zu schaffen, die den Piloten bei einer Ueberlastung des Triebwerks bzw. dessen Getriebes warnt.

Die erfindungsgemässe Lösung dieser Aufgabe ist Gegenstand der Patentansprüche 1 und 2.

Die Einrichtung gemäss Anspruch 1 misst mittels der Messvorrichtung das Drehmoment oder die Leistung des Flugtriebwerks (bzw. mindestens eines der Flugtriebwerke) und gibt mittels dem von der Steuervorrichtung gesteuerten Tonsignalgeber ein Tonsignal an den Kopfhörer des Piloten, wenn der Messwert einen Maximalwert überschreitet, d.h. das Triebwerk bzw. dessen Getriebe überlastet wird. Die Einrichtung gemäss Anspruch 2 misst nicht direkt das Drehmoment bzw. die Leistung sondern bestimmt mittels der Messvorrichtung und der eine Datenverarbeitungseinheit und einen Programmspeicher aufweisenden Steuervorrichtung die für die Belastung des Triebwerks bzw. Getriebes des Drehflügelflugzeugs indirekt massgebenden Parameter, nämlich die Dichtenhöhe und den Blattwinkel der Rotorblätter und beaufschlagt den Tonsignalgeber, wenn der Blattwinkelmesswert einen nach der jeweiligen Dichtenhöhe bestimmten Blattwinkelmaximalwert überschreitet, wodurch das Triebwerk bzw. dessen Getriebe überlastet wird.

Bevorzugte Ausführungsarten der in den Ansprüchen 1 und 2 definierten Erfindungen sind Gegenstand der Patentansprüche 3 bis 9.

Durch das von der erfindungsgemässen Einrichtung erzeugte, im Kopfhörer auch bei hohem Lärmpegel gut hörbare Tonsignal wird der Pilot bei einer Ueberlastung des Getriebes bzw. Triebwerks unverzüglich gewarnt. Diese Warnung ist besonders wichtig bei Helikoptern, deren Flugmotorleistung wesentlich grösser ist als die zulässige Belastung des Getriebes, und bei denen die Montage eines Drehmomentgebers aus konstruktiven Gründen nicht möglich ist, so dass der Pilot bisher eine Ueberlastung des Getriebes nicht ohne weiteres erkennen konnte, sondern nach in den Betriebsvorschriften des Helikopters enthaltenen Diagrammen aufgrund der Druckhöhe und Temperatur die Dichtenhöhe und aufgrund dieser den maximal zulässigen Blattwinkel bestimmen musste. Bisher war deshalb die Gefahr einer Beschädigung des Triebwerks bzw. Getriebes infolge Nichtbeachtung dieser Vorschriften gross. Um eine Missachtung des Warnsignals durch den Piloten zu unterbinden, können die Ueberlastung anzeigende Daten gemäss den Ansprüchen 4 oder 5 und 6 in einem Kontroll-Speicher gespeichert werden, dessen Inhalt mittels einer tragbaren, an die Steuervorrichtung oder den Kontroll-Speicher anschliessbaren, dem Piloten nicht zugänglichen Anschlusseinheit lesbar und nur mittels dieser löschbar sind.

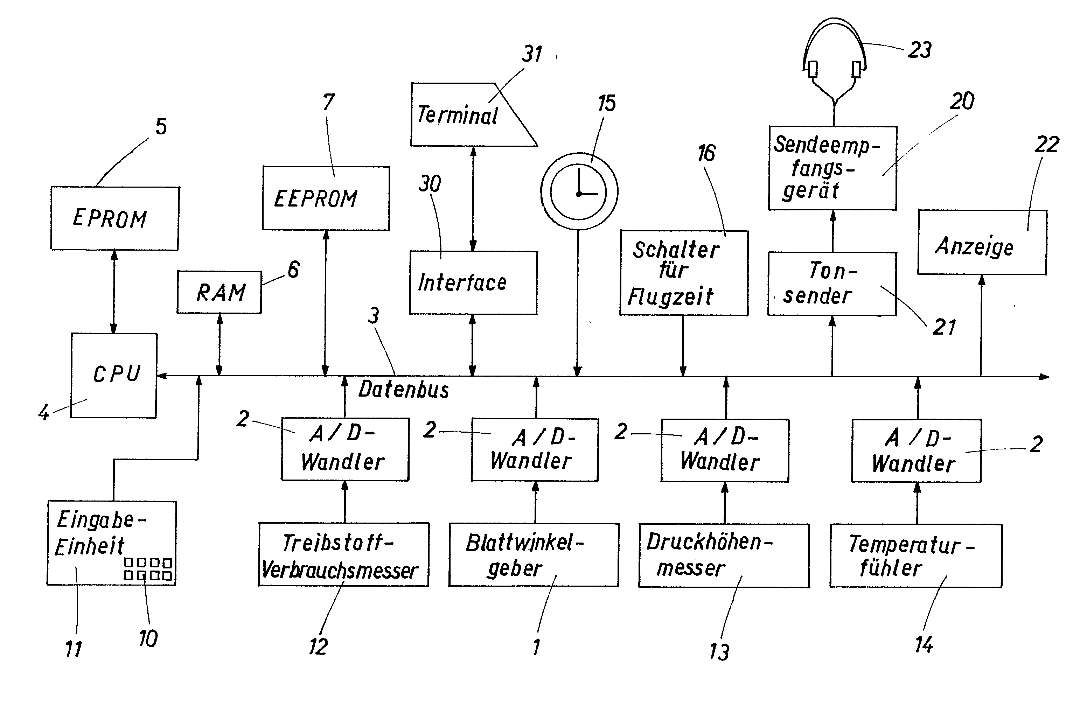

Im folgenden werden Ausführungsbeispiele der Erfindung anhand der Zeichnung näher erläutert.

Die einzige Figur zeigt ein Blockschema einer in einem Helikopter installierten Warneinrichtung.

Der Helikopter ist mit einer (nicht dargestellten) Blattwinkelverstellvorrichtung für die Verstellung des Blattwinkels der Rotorblätter ausgerüstet, die einen durch ein Getriebe mit den Rotorblättern verbundenen Verstellgriff aufweist. Am Getriebe ist ein als sog. "Synchro-Resolver-Transformator" (Drehmelder) ausgebildeter Blattwinkelgeber 1 angeordnet, der über einen Analog/Digital-Wandler 2 an den Datenbus 3 der Zentraleinheit (CPU) 4 eines Mikroprozessors angeschlossen ist. Der Mikroprozessor und die ihn speisende Batterie sind in einem plombierten Gehäuse angeordnet, damit die Einrichtung nicht abgestellt werden kann. Die Zentraleinheit 4 ist mit einem Programmspeicher (EPROM) 5, einem Schreib-/Lese-Arbeitsspeicher (RAM) 6 und einem zur Speicherung von Ueberlastungsdaten dienenden Kontroll-Speicher (EEPROM) 7 verbunden. An den Datenbus 3 der Zentraleinheit 4 sind neben dem Blattwinkelgeber 1 folgende weitere Eingabeeinheiten angeschlossen: Eine mit einer Tastatur 10 für die Eingabe von Daten, insbesondere des Personengewichts und der getankten Treibstoffmenge, versehene Eingabeinheit 11, ein Treibstoff-Verbrauchsmesser 12, ein Druckhöhenmesser (barometrischer Höhenmesser) 13, ein zur Messung der Aussentemperatur an der Helikopter-Aussenseite montierter Temperaturfühler 14, eine Uhr 15 und ein Schalter 16 für die Bestimmung der Flugzeit, der so zwischen dem Landegestell und der Zelle (Chassis) des Helikopters angeordnet ist, dass er bei dessen Aufsetzen ein-und bei dessen Abheben ausgeschaltet wird. Dabei sind die Eingabeeinheiten, die ein Analog-Signal abgeben, über einen Analog/Digital-Wandler 2 an den Datenbus 3 angeschlossen. Als Ausgabeeinheiten sind an den Datenbus 3 der Zentraleinheit 4 ein mit dem Sende-/Empfangsgerät (Intercom) 20 des Flugzeugs verbundener Tonsender 21 und eine Anzeige 22 angeschlossen, wobei der Kopfhörer des Geräts 20 mit 23 bezeichnet ist. Ferner ist ein Interface 30 vorgesehen, an das ein tragbarer Eingabe-/Ausgabe-Terminal 31 anschliessbar ist, der zum Lesen und Löschen des Inhalts des EEPROM-Kontrollspeichers 7 dient.

Im Programmspeicher 5 sind Datenverarbeitungsvorschriften für die Bestimmung der Dichtenhöhe aus der Druckhöhe und der Temperatur, des zulässigen Maximalwerts des Blattwinkels aus der Dichtenhöhe, des Momentangewichts aus dem Startgewicht und dem Gewicht des verbrauchten Treibstoffs, der maximal zulässigen Fluggeschwindigkeit aus der Dichtenhöhe und dem Momentangewicht, und der maximalen Traglast gespeichert. Diese Datenverarbeitungs-bzw. Programmsteuervorschriften werden im folgenden im Zusammenhang mit der Arbeitsweise der Einrichtung erläutert.

Vor dem Start gibt der Pilot das Gewicht der mitfliegenden Personen und die im Tank befindliche Treibstoffmenge mittels der Eingabetastatur 10 ein. (Die Treibstoffmenge könnte auch selbsttätig durch einen an den Datenbus 3 angeschlossenen Füllstandmesser eingegeben werden). Die Zentraleinheit 4 berechnet daraus und aus dem im Programmspeicher 5 gespeicherten Eigengewicht des Helikopters das Startgewicht $G_{Start}$.

Beim Abheben des Helikopters wird der Schalter 16 selbsttätig geöffnet und die Zentraleinheit 4 speichert im Kontroll-Speicher 7 ein das Starten des Helikopter kennzeichnendes Codezeichen mit dem Datum und der Startzeit $t_{Start}$, die von der Uhr 15 angezeigt werden.

Während des Flugs bestimmt die Zentraleinheit 4 periodisch im 2-Sekunden-Takt mittels der im Programmspeicher 5 gespeicherten Programmvorschrift die Dichtenhöhe $H_{Dichte}$ aus der vom Druckhöhenmesser 13 angezeigten Druckhöhe $H_{Druck}$ und der vom Temperaturfühler 14 angezeigten Aussentemperatur T. Die Programmvorschrift für die Bestimmung der Dichtenhöhe $H_{Dichte}$ basiert auf der bekannten, üblicherweise in der Betriebsvorschrift des Helikopters enthaltenen Darstellung der Dichtenhöhe in Funktion der Temperatur als Kurvenschar mit der Druckhöhe als Parameter. (Das übliche Diagramm zeigt eine Kurvenschar mit der Druckhöhe als Parameter im Dichtenhöhe/Temperatur-Koordinatensystem). Für die Bestimmung der Dichtenhöhe sind deshalb im Programmspeicher 5 aufgrund der bekannten Kurvenschar nach dem Lagrangeschen Interpolationsverfahren bestimmte Approximationspolynome der Form

$$H_{Dichte} = A + B \bullet T + C \bullet T^2$$

mit $A = K_0 \bullet H_{Druck} + K_1$

$B = K_2 \bullet H_{Druck} + K_3$

$$C = K_4 \bullet H_{Druck} + K_5$$

gespeichert, worin $K_i$ Konstanten bezeichnen. Aus der so bestimmten Dichtenhöhe $H_{Dichte}$ berechnet die Zentraleinheit 4 den zulässigen Maximalwert $B_{max}$ des Blattwinkels nach der (im Programmspeicher 5 gespeicherten) Formel

$$B_{max} = K_6 + K_7 \bullet H_{Dichte}$$

Diese Formel (mit den Werten der Konstanten $K_6$, $K_7$) ergibt sich aus der Betriebsvorschrift des Helikopters. (Blattwinkel und Dichtenhöhe bestimmen die Belastung des Helikoptermotors und dessen Getriebes. In der Betriebsvorschrift eines Helikopters ist deshalb angegeben, wie gross der Blattwinkel bei verschiedenen Dichtenhöhen sein darf, damit der Motor bzw. das Getriebe nicht überlastet wird).

Die Zentraleinheit berechnet nun den Quotienten Q aus dem vom Blattwinkelgeber 1 angegebenen, momentanen Blattwinkelmesswert $B_{mess}$ und dem aus der momentanen Dichtenhöhe $H_{Dichte}$ berechneten Maximalwert $B_{max}$ des Blattwinkels:

$$Q = B_{mess}/B_{max}$$

Der Quotient Q und/oder die Werte $B_{mess}$ und $B_{max}$ werden dem Piloten an der Anzeige 22 angezeigt. (Zweckmässig hat die Anzeige ein Analog-Display z. B. in Form einer Reihe von Leuchtdioden, deren jeder ein Prozentwert des Quotienten Q zugeordnet ist). Ist der Quotient Q grösser als 1 so steuert die Zentraleinheit 4 den Tonsignalgeber 21 in Abhängigkeit vom Quotienten so, dass bis zum Grenzwert 1,05 des Quotienten eine Tonimpulsfolge erzeugt wird, deren Pulsfolgefrequenz umso grösser ist, je grösser der Quotient ist, und über dem Grenzwert 1,05 ein dauerndes Tonsignal erzeugt wird. Die Pulsfolgefrequenz der Tonimpulsfolge beträgt z.B. beim Quotienten 1,01 5 Hz und beim Quotienten 1,05 15 Hz. Zwischen den Quotienten 1,01 und 1,05 nimmt die Frequenz linear von 5 auf 15 Hz zu. Das Tonsignal wird vom Tonsender 21 über das Sendeempfangsgerät 20 an den Kopfhörer 23 des Piloten gegeben, so dass dieser gewarnt und aufgrund der Pulsfolgefrequenz bzw. des Dauersignals das Mass der Ueberlastung erkennen kann. (Das bei Ueberschreiten des Grenzwerts erzeugte, dauernde Tonsignal hat den Vorteil, dass der Pilot unzweideutig erkennt, dass eine kritische Grenze überschritten ist. Selbstverständlich könnte aber auch über dem Grenzwert eine Tonimpulsfolge mit entsprechend hoher Pulsfolgefrequenz erzeugt werden). Wenn der Quotient grösser als 1,05 ist oder länger als 10 Sekunden im Bereich von 1,01 bis 1,05 liegt, speichert die Zentraleinheit 4 im Kontrollspeicher 7 den Quotienten Q bzw. Quotientenbereich oder ein entsprechendes Codezeichen mit der momentanen Uhrzeit der Uhr 15 und/oder der Flugzeit, die sich aus der im Speicher 7 gespeicherten Startzeit $t_{Start}$ ergibt und mit der Dauer der jeweiligen Ueberschreitung.

Während des Flugs bestimmt die Zentraleinheit 4 weiter periodisch mittels der im Programmspeicher 5 gespeicherten Programmvorschrift die maximal zulässige Fluggeschwindigkeit aus der Dichtenhöhe und dem Momentangewicht. Das Momentangewicht $G_{mom}$ wird von der Zentraleinheit laufend durch Subtraktion des vom Treibstoff-Verbrauchsmessers 12 angegebenen Treibstoffverbrauchs (in Gewichtseinheiten) vom Startgewicht $G_{Start}$ berechnet. Die Programmvorschrift für die maximal zulässige Fluggeschwindigkeit basiert auf der in der Betriebsvorschrift des Helikopters enthaltenen Darstellung der Dichtenhöhe in Funktion der Fluggeschwindigkeit als Kurvenschar mit dem Momentangewicht als Parameter. (Das übliche Diagramm zeigt eine Kurvenschar mit dem Momentangewicht als Parameter im Dichtenhöhe/Geschwindigkeits-Koordinatensystem). Für die Bestimmung der maximalen Fluggeschwindigkeit $v_{max}$ sind deshalb im Programmspeicher 5 aufgrund der bekannten Kurvenschar bestimmte Approximationspolynome gespeichert, deren Form im Prinzip den im Zusammenhang mit der Bestimmung der Dichtenhöhe oben angegebenen Approximationspolynomen entspricht und deshalb nicht näher angegeben ist (Die Maximalgeschwindigkeit wird aus einem Polynom dritten Grades mit der Dichtenhöhe als Variablen bestimmt, wobei die Konstanten bzw. Koeffizienten als Funktion des Momentangesichts bestimmt werden.).

Die so bestimmte maximal zulässige Fluggeschwindigkeit $v_{max}$ wird an der Anzeige 22 angezeigt. Die effektive Fluggeschwindigkeit wird dem Piloten vom Fahrtmesser (Messgeber ist ein Pitotbzw. Prandtl-Rohr) des Helikopters angezeigt, so dass der Pilot die Fluggeschwindigkeit nach der an der Anzeige 22 angezeigten, zulässigen Maximalgeschwindigkeit richten kann. Der Fahrtmesser des Helikopters könnte selbstverständlich auch mit der Zentraleinheit 4 verbunden sein, wobei diese die effektive Fluggeschwindigkeit zusammen mit der Maximalgeschwindigkeit an der Anzeige 22 anzeigen und bei Ueberschreitung der letzteren ein optisches Warnsignal an einer Blinkleuchte auslösen könnte.

Wenn der Helikopter landet, wird der Schalter 16 geschlossen, und die Zentraleinheit 4 speichert im Speicher 7 ein das Landen des Helikopters kennzeichnendes Codezeichen mit dem Datum und der Landezeit $t_{Lande}$, die von der Uhr 15 angezeigt werden. Mittels dem an das Interface 30 anschliessbaren, tragbaren Terminal 31 kann der Inhalt des Kontroll-Speichers 7 gelesen und gelöscht werden. Der Terminal 31 wird beim Flug nicht mitgeführt und dem Piloten nicht zugänglich gemacht, damit dieser nicht die Daten für die von ihm verursachten Ueberschreitungen des maximal zulässigen Blattwinkels löschen kann. Die mittels des Terminals 31 lesbaren Ueberlastungsdaten erlauben eine Kontrolle des Piloten und sind für das Wartungspersonal von Bedeutung. Die gespeicherten Start-und Landezeiten bzw. Flugzeiten gewährleisten, insbesondere wenn der Helikopter ausgeliehen wird, eine zuverlässige Abrechnung der Flugkosten.

Im Programmspeicher 5 ist ferner eine den Betriebsvorschriften des Helikopters entsprechende Datenverarbeitungsvorschrift für die Bestimmung der maximalen Traglast gespeichert. Die maximale Traglast berechnet sich aus der vom Piloten mittels der Tastatur 10 eingegebenen Treibstoff-Startmenge, dem Personengewicht und der während des Flugs zu erreichenden grössten Dichtenhöhe. Die letztere kann vom Piloten aufgrund der Höhe des Startplatzes, der am Startplatz herrschenden Temperatur und des Luftdrucks sowie der zu überwindenden Höhendifferenz berechnet und mittels der Tastatur 10 eingegeben werden. Die Berechnung der grössten Dichtenhöhe kann auch von der Zentraleinheit mittels einer entsprechenden Programmvorschrift aufgrund der vom Druckhöhenmesser und Temperaturfühler 13 und 14 angegebenen Druckhöhe und Temperatur sowie der in diesem Fall mittels der Eingabetastatur einzugebenden Höhendifferenz, die während des Flugs zu überwinden ist, berechnet werden. Die Zentraleinheit bestimmt nach den mittels der Tastatur 10 eingegebenen Werten die maximale Traglast und zeigt diese dem Piloten an der Anzeige 22 an. Ferner könnte eine Traglast-Waage an den Datenbus 3 der Zentraleinheit 4 angeschlossen bzw. anschliessbar sein, damit die effektive Traglast an der Anzeige 22 angezeigt werden kann.

Eine (nicht dargestellte) Variante der Warneinrichtung hat eine am Hubtriebwerk (Flugmotor, Luftstrahltriebwerk) eines Senkrechtstarters angeordnete Messvorrichtung mit einem Drehmomentgeber und ggf. einem Drehzahlmesser für die Messung des Drehmoments bzw. der Leistung des Hubtriebwerks. Die Messvorrichtung ist mit einer eine Vergleich-oder Datenverarbeitungseinheit aufweisenden Steuervorrichtung verbunden, welche den von der Messvorrichtung abgegebenen Messwert des Drehmoments bzw. der Leistung mit einem aufgrund der Betriebsvorschrift des Senkrechtstarters festgelegten Maximalwert für das Drehmoment bzw. die Leistung des Hubtriebwerks vergleicht. Solange der Messwert den Maximalwert überschreitet, steuert die Steuervorrichtung einen mit dem Sendeempfangsgerät des Senkrechtstarters verbundenen Tonsignalgeber, so dass dieser während der Dauer der Ueberschreitung ein dauerndes oder intermittierendes Tonsignal an den Kopfhörer des Sendeempfangsgeräts gibt.

## Ansprüche

1. Warneinrichtung an einem Flugzeug, insbesondere einem Senkrechtstarter, das mit einem Sendeempfangsgerät mit Kopfhörer (23) ausgerüstet ist, gekennzeichnet durch eine Messvorrichtung für das Drehmoment oder die Leistung des oder mindestens eines der Flugtriebwerke, eine eine Vergleich-oder Datenverarbeitungseinheit aufweisende Steuervorrichtung, welche den von der Messvorrichtung abgegebenen Messwert mit einem vorbestimmten Maximalwert für das Drehmoment bzw. die Leistung des Triebwerks vergleicht und solange der Messwert den Maximalwert überschreitet einen mit dem Sendeempfangsgerät verbundenen Tonsignalgeber steuert, so dass dieser während der Dauer der Ueberschreitung ein dauerndes oder intermittierendes Tonsignal an den Kopfhörer (23) gibt.

2. Warneinrichtung an einem Drehflügelflugzeug, das mit einer Blattwinkelverstellvorrichtung für die Verstellung des Blattwinkels der Rotorblätter und einem Sendeempfangsgerät (20) mit Kopfhörer (23) ausgerüstet ist, gekennzeichnet durch eine Messvorrichtung (1, 12, 13, 14) mit einem an der Blattwinkelverstellvorrichtung angeordneten Blattwinkelgeber (1), einem Druckhöhenmesser (13) und einem Aussentemperaturfühler (14), eine mit der Messvorrichtung (1, 12, 13, 14) verbundene Steuervorrichtung (4-6), die eine Datenverarbeitungseinheit (4) und einen Programmspeicher (5) aufweist, in dem eine Datenverarbeitungsvorschrift für die Bestimmung der Dichtenhöhe aus der Druckhöhe und der Aussentemperatur und eine der Betriebsvorschrift des Flugzeugs entsprechende Datenverarbeitungsvorschrift für die Bestimmung des zulässigen Maximalwerts des Blattwinkelsaus der Dichtenhöhe gespeichert sind, wobei die Steuervorrichtung (4-6) nach der aus der jeweiligen Druckhöhe und Aussentemperatur bestimmten Dichtenhöhe den für diese Dichtenhöhe zulässigen Maximalwert des Blattwinkels bestimmt, den vom Blattwinkelgeber (1) erhaltenen Blattwinkelmesswert mit dem Maximalwert vergleicht und solange der Messwert den Maximalwert überschreitet einen mit dem Sendeempfangsgerät (20) verbundenen Tonsignalgeber (21) steuert, so dass dieser während der Dauer der Ueberschreitung ein dauerndes oder intermittierendes Tonsignal an den Kopfhörer (23) gibt.

3. Einrichtung nach Anspruch 1 oder 2, dadurch gekennzeichnet, dass die eine Datenverarbeitungseinheit (4) aufweisende Steuervorrichtung (4-6) periodisch den Quotienten aus dem Drehmoment-oder Leistungs-bzw. Blattwinkelmesswert und dem Maximalwert berechnet und bei den Wert 1 übersteigendem Quotienten den Tonsignalgeber (21) in Abhängigkeit vom Quotienten so steuert, dass eine Tonimpulsfolge erzeugt wird, deren Pulsfolgefrequenz umso grösser ist, je grösser der Quotient ist, oder eine solche Tonimpulsfolge bis zu einem vorbestimmten Grenzwert des Quotienten, z. B. dem Grenzwert 1,05, und darüber ein dauerndes Tonsignal erzeugt wird.

4. Einrichtung nach einem der Ansprüche 1 bis 3, dadurch gekennzeichnet, dass die eine Datenverarbeitungseinheit (4) aufweisende Steuervorrichtung (4-6) periodisch den Quotienten aus dem Drehmoment-oder Leistungs-bzw. Blattwinkelmesswert und dem Maximalwert berechnet, und mit einem Kontroll-Speicher (7) verbunden ist, in dem jeder den Wert 1 während einer bestimmten Zeit und/oder um einen bestimmten Betrag überschreitende Quotient gespeichert wird.

5. Einrichtung nach Anspruch 4, dadurch gekennzeichnet, dass die Steuervorrichtung (4-6) mit einer Uhr (15) verbunden ist und jeden den Wert 1 während einer bestimmten Zeit und/oder um einen bestimmten Betrag überschreitenden Quotienten jeweils mit der zugeordneten Uhrzeit im Kontroll-Speicher (7) speichert.

6. Einrichtung nach Anspruch 4 oder 5, gekennzeichnet durch eine an die Steuervorrichtung (4-6) oder den Kontroll-Speicher (7) anschliessbare, tragbare Anschlusseinheit (31), mittels welcher der Inhalt des Kontroll-Speichers (7) lesbar und löschbar ist, wobei der Kontroll-Speicher (7) nur mittels der im Flugzeug nicht mitzuführenden Anschlusseinheit (31) löschbar ist, damit der Pilot den die Ueberschreitungen des Maximalwerts festhaltenden Speicherinhalt nicht löschen kann und dieser nur durch einen Berechtigten prüf-und löschbar ist.

7. Einrichtung nach einem der Ansprüche 1 bis 6, dadurch gekennzeichnet, dass die Steuervorrichtung (4-6) mit einer Eingabetastatur (10) oder Messgeräten für die Eingabe bzw. Messung der das Startgewicht bestimmenden Treibstoffmenge sowie Personenlast, einem Treibstoffverbrauchsmesser (12), einem Druckhöhenmesser (13), einem Aussentemperaturfühler (14) sowie einer Anzeige (22) verbunden ist und eine Datenverarbeitungseinheit (4) sowie einen Programmspeicher (5) aufweist, in dem eine Datenverarbeitungsvorschrift für die Bestimmung der Dichtenhöhe aus der Druckhöhe und der Aussentemperatur sowie eine den Betriebsvorschriften des Flugzeugs entsprechende Datenverarbeitungsvorschrift für die Bestimmung der maximal zulässigen Fluggeschwindigkeit aus der Dichtenhöhe und dem Momentangewicht gespeichert sind, wobei die Steuervorrichtung (4-6) nach der aus der jeweiligen Druckhöhe und Aussentemperatur bestimmten Dichtenhöhe und dem aus der jeweiligen Differenz des Startgewichts und dem Gewicht des verbrauchten Treibstoffs bestimmten Momentangewicht die für diese Dichtenhöhe und dieses Momentangewicht maximal zulässige Fluggeschwindigkeit bestimmt und an der Anzeige (22) anzeigt.

8. Einrichtung nach einem der Ansprüche 1 bis 7, dadurch gekennzeichnet, dass die Steuervorrichtung (4-6) mit einer Eingabetastatur (10) und/oder Messgeräten für die Eingabe bzw. Messung der Treibstoffstartmenge, des Personengewichts, der Dichtenhöhe und/oder der Druckhöhe und Aussentemperatur, und der während des Flugs zu überwindenden Höhendifferenz, sowie mit einer Anzeige (22) verbunden ist und eine Datenverarbeitungseinheit (4) sowie einen Programmspeicher (5) aufweist, in dem den Betriebsvorschriften des Flugzeugs entsprechende Datenverarbeitungsvorschriften für die Bestimmung der maximalen Traglast aus den eingegebenen bzw. gemessenen Werten gespeichert sind, wobei die Steuervorrichtung (4-6) nach diesen Werten die maximale Traglast bestimmt und an der Anzeige (22) anzeigt.

9. Einrichtung nach einem der Ansprüche 1 bis 8, dadurch gekennzeichnet, dass die eine Datenverarbeitungseinheit (4) aufweisende Steuervorrichtung (4-6) mit einer Uhr (15) und einem Schalter (16) verbunden ist, der so am Landegestell des Flugzeugs angeordnet ist, dass er bei dessen Abheben und Aufsetzen geschaltet wird, wobei die Steuervorrichtung (4-6) bei jedem Schaltvorgang ein das Abheben bzw. Aufsetzen kennzeichnendes Codezeichen mit der jeweiligen Uhrzeit und/oder die zwischen dem Schaltvorgang beim Abheben und demjenigen beim Aufsetzen verstrichene Flugzeit in einem Speicher bzw. im Kontroll-Speicher (7) speichert.

EPROM  5

EEPROM  7

Terminal  31

15

16

Sendeemp-fangs-gerät  20  23

22

30

RAM  6

Interface

Schalter für Flugzeit

Ton-sender  21

Anzeige

CPU

4

Datenbus  3

A/D-Wandler  2

A/D-Wandler  2

A/D-Wandler  2

A/D-Wandler  2

Eingabe-Einheit  10  11

Treibstoff-Verbrauchsmesser  12

Blattwinkel-geber  1

Druckhöhen-messer  13

Temperatur-fühler  14

0 259 675